# EUROPEAN PATENT APPLICATION

(11) **EP 3 769 889 A1**
(43) Date of publication of application: **27.01.2021**
(21) Application number: 18911285.7
(22) Date of filing: 22.03.2018
(51) Int. Cl.: B23C 5/28, B23B 47/00, B23C 5/10, B23Q 11/10

(54) **END MILL**

(71) Applicant: Sumitomo Electric Hardmetal Corp., Itami-shi, Hyogo 664-0016 (JP)
(72) Inventor: NAKAMURA, Nanako, Itami-shi, Hyogo 664-0016 (JP); KOBAYASHI, Yutaka, Itami-shi, Hyogo 664-0016 (JP); KUKINO, Satoru, Itami-shi, Hyogo 664-0016 (JP)
(74) Representative: Boult Wade Tennant LLP
(86) International application number: PCT/JP2018/011398
(87) International publication number: WO 2019/180872

(57) **Abstract**

An end mill has a shank and a cutting edge main body portion. The cutting edge main body portion is provided on the shank and has a coolant supply path. The cutting edge main body portion includes a trailing end surface on a side of the shank, and a leading end surface opposite to the trailing end surface. The coolant supply path has a tapered portion which widens in a direction from the trailing end surface toward the leading end surface.

## Description

### TECHNICAL FIELD

The present disclosure relates to an end mill.

### BACKGROUND ART

Japanese Patent Laying-Open No. 2015-226953 (PTL 1) describes an end mill for machining a hard and brittle material. In the end mill, an oil hole is provided at the center of cutting edge portions.

### CITATION LIST

### PATENT LITERATURE

PTL 1: Japanese Patent Laying-Open No. 2015-226953

### SUMMARY OF INVENTION

An end mill in accordance with the present disclosure includes a shank and a cutting edge main body portion. The cutting edge main body portion is provided on the shank and has a coolant supply path. The cutting edge main body portion includes a trailing end surface on a side of the shank, and a leading end surface opposite to the trailing end surface. The coolant supply path has a tapered portion which widens in a direction from the trailing end surface toward the leading end surface.

### BRIEF DESCRIPTION OF DRAWINGS

Fig. 1 is a schematic perspective view of an end mill in accordance with a first embodiment.
Fig. 2 is an enlarged schematic perspective view in the vicinity of a cutting edge main body portion of the end mill in accordance with the first embodiment.
Fig. 3 is a schematic front view of the end mill in accordance with the first embodiment.
Fig. 4 is a schematic end view taken along a line IV-IV in Fig. 3.
Fig. 5 is a schematic end view taken along a line V-V in Fig. 3.
Fig. 6 is a schematic front view of an end mill in accordance with a second embodiment.
Fig. 7 is a schematic end view taken along a line VII-VII in Fig. 6.
Fig. 8 is a schematic end view taken along a line VIII-VIII in Fig. 6.
Fig. 9 is a schematic front view of an end mill in accordance with a third embodiment.
Fig. 10 is a schematic end view taken along a line X-X in Fig. 9.
Fig. 11 is a schematic end view taken along a line XI-XI in Fig. 9.
Fig. 12 is a schematic front view of an end mill in accordance with a fourth embodiment.
Fig. 13 is a schematic end view taken along a line XIII-XIII in Fig. 12.
Fig. 14 is a schematic end view taken along a line XIV-XIV in Fig. 12.
Fig. 15 is an enlarged schematic perspective view in the vicinity of a cutting edge main body portion of an end mill in accordance with a fifth embodiment.
Fig. 16 is a schematic front view of the end mill in accordance with the fifth embodiment.
Fig. 17 is a schematic end view taken along a line XVII-XVII in Fig. 16.
Fig. 18 is a schematic end view taken along a line XVIII-XVIII in Fig. 16.
Fig. 19 is a schematic front view of an end mill in accordance with a sixth embodiment.
Fig. 20 is a schematic end view taken along a line XX-XX in Fig. 19.
Fig. 21 is a schematic end view taken along a line XXI-XXI in Fig. 19.
Fig. 22 is a schematic front view of an end mill in accordance with a seventh embodiment.
Fig. 23 is a schematic end view taken along a line XXIII-XXIII in Fig. 22.
Fig. 24 is a schematic end view taken along a line XXIV-XXIV in Fig. 22.
Fig. 25 is an enlarged schematic perspective view in the vicinity of a cutting edge main body portion of an end mill in accordance with an eighth embodiment.
Fig. 26 is a schematic front view of the end mill in accordance with the eighth embodiment.
Fig. 27 is a schematic end view taken along a line XXVII-XVII in Fig. 26.
Fig. 28 is a schematic end view taken along a line XXVIII-XXVIII in Fig. 26.
Fig. 29 is a schematic front view of an end mill in accordance with a ninth embodiment.
Fig. 30 is a schematic end view taken along a line XXX-XXX in Fig. 29.
Fig. 31 is a schematic end view taken along a line XXXI-XXXI in Fig. 29.

### DETAILED DESCRIPTION

### [Problem to be Solved by the Present Disclosure]

When a hard and brittle material is machined at high rotation, cutting edge portions are likely to be worn by friction heat. Since an oil hole is merely provided in the end mill described in Japanese Patent Laying-Open No. 2015-226953 (PTL 1), it is not possible to effectively supply a coolant to the cutting edge portions. Accordingly, in the end mill, it is not possible to fully suppress wear of the cutting edge portions, and thus the end mill has a short life.

One aspect of the present invention has been made to solve the aforementioned problem, and an object thereof is to provide an end mill having a long life.

### [Advantageous Effect of the Present Disclosure]

According to one aspect of the present invention, an end mill having a long life can be provided.

### [Summary of Embodiments of the Present Invention]

First, a summary of embodiments of the present invention will be described.
(1) An end mill 1 in accordance with the present disclosure includes a shank 10 and a cutting edge main body portion 50. Cutting edge main body portion 50 is provided on shank 10 and has a coolant supply path 40. Cutting edge main body portion 50 includes a trailing end surface 32 on a side of shank 10, and a leading end surface 21 opposite to trailing end surface 32. Coolant supply path 40 has a tapered portion 41 which widens in a direction from trailing end surface 32 toward leading end surface 21.
   According to end mill 1 in accordance with (1) described above, coolant supply path 40 has tapered portion 41 which widens in the direction from trailing end surface 32 toward leading end surface 21. Thereby, a coolant is vigorously discharged to tips of cutting edges, when compared with an end mill without having tapered portion 41. Accordingly, the efficiency of cooling the tips of the cutting edges is improved, and end mill 1 can have a longer life.
(2) In end mill 1 in accordance with (1) described above, cutting edge main body portion 50 may include an outer circumferential surface 33 which is continuous to trailing end surface 32 and is provided around a rotation axis A.
(3) In end mill 1 in accordance with (2) described above, cutting edge main body portion 50 may include a base portion 30 having trailing end surface 32 and a bottom surface 31 opposite to trailing end surface 32, and a cutting edge portion 20 provided on bottom surface 31. Bottom surface 31 may be continuous to tapered portion 41, inclined relative to tapered portion 41, and continuous to outer circumferential surface 33. Thereby, the coolant can be effectively supplied to the vicinity of the tips of the cutting edges. Accordingly, the efficiency of cooling the tips of the cutting edges is further improved, and end mill 1 can have a further longer life.
(4) In end mill 1 in accordance with (3) described above, when viewed from a direction parallel to rotation axis A, a boundary portion 34 between bottom surface 31 and tapered portion 41 may be located between an inner circumferential portion 27 of cutting edge portion 20 and outer circumferential surface 33. Thereby, the coolant can be effectively supplied to the cutting edges on both an inner circumferential side and an outer circumferential side. Accordingly, the efficiency of cooling the cutting edges is further improved, and end mill 1 can have a further longer life.
(5) In end mill 1 in accordance with (3) described above, bottom surface 31 may have a first bottom surface portion 35 which is continuous to tapered portion 41, and a second bottom surface portion 36 which is continuous to outer circumferential surface 33. When viewed from a direction parallel to rotation axis A, a distance from leading end surface 21 to first bottom surface portion 35 may be longer than a distance from leading end surface 21 to second bottom surface portion 36.
(6) In end mill 1 in accordance with (5) described above, first bottom surface portion 35 may be continuous to cutting edge portion 20 and separated from outer circumferential surface 33. Thereby, the coolant can be effectively supplied to the vicinity of the cutting edges. Accordingly, the efficiency of cooling the cutting edges is further improved, and end mill 1 can have a further longer life.
(7) In end mill 1 in accordance with (5) described above, first bottom surface portion 35 may be continuous to each of cutting edge portion 20 and outer circumferential surface 33. Thereby, the coolant can be effectively supplied to the vicinity of the cutting edges on the outer circumferential side. Accordingly, the efficiency of cooling the cutting edges on the outer circumferential side is further improved, and end mill 1 can have a further longer life.
(8) In end mill 1 in accordance with (5) described above, first bottom surface portion 35 may be separated from cutting edge portion 20 and continuous to outer circumferential surface 33.
(9) In end mill 1 in accordance with any of (3) to (8) described above, outer circumferential surface 33 may be provided with an outer circumferential groove 38 which is continuous to bottom surface 31. Thereby, chips and the coolant can be effectively discharged. Accordingly, the efficiency of cooling the tips of the cutting edges is further improved, and end mill 1 can have a further longer life.
(10) In end mill 1 in accordance with any of (3) to (9) described above, when a height of cutting edge portion 20 in a direction parallel to rotation axis A is defined as a first height T1, and a depth of tapered portion 41 in the direction parallel to rotation axis A is defined as a first depth T2, a value obtained by dividing first height T1 by first depth T2 may be 0.1 or more and 200 or less.
(11) In end mill 1 in accordance with any of (2) to (9) described above, when a diameter of cutting edge main body portion 50 in a direction perpendicular to rotation axis A is defined as a first diameter D1, and a maximum value of a diameter of tapered portion 41 in the direction perpendicular to rotation axis A is defined as a second diameter D2, a value obtained by dividing second diameter D2 by first diameter D1 may be 0.005 or more and 3 or less.
(12) In end mill 1 in accordance with (11) described above, coolant supply path 40 may have a cylindrical portion 42 which is continuous to tapered portion 41 on a side of trailing end surface 32 and extends along rotation axis A. When a diameter of cylindrical portion 42 in the direction perpendicular to rotation axis A is defined as a third diameter D3, a value obtained by dividing third diameter D3 by first diameter D1 may be 0.005 or more and 3 or less. Second diameter D2 is larger than third diameter D3.
(13) In end mill 1 in accordance with any of (1) to (12) described above, a material constituting cutting edge main body portion 50 may be any of polycrystalline diamond, single crystal diamond, or cubic boron nitride.
(14) In end mill 1 in accordance with (13) described above, the material constituting cutting edge main body portion 50 may be polycrystalline diamond. The polycrystalline diamond may have an average particle diameter of 1 µm or less. When a workpiece is made of an iron-based material, the cutting edges may be significantly worn, because diamond and iron have high reactivity. Accordingly, the effect of suppressing wear is enhanced in particular in end mill 1 having cutting edge main body portion 50 made of diamond and used for a workpiece made of an iron-based material.

### [Details of Embodiments of the Present Disclosure]

Hereinafter, embodiments of the present disclosure will be described based on the drawings. It should be noted that identical or corresponding parts in the drawings below will be designated by the same reference numerals, and the description thereof will not be repeated.

### (First Embodiment)

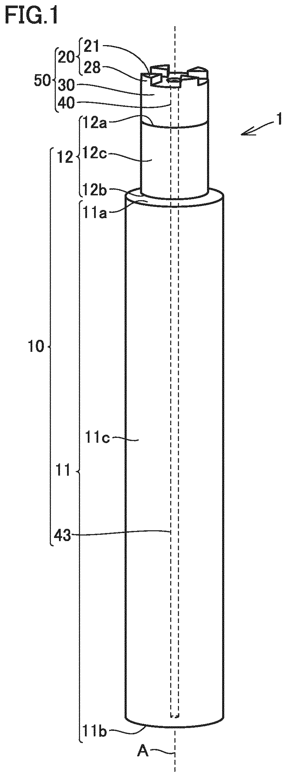

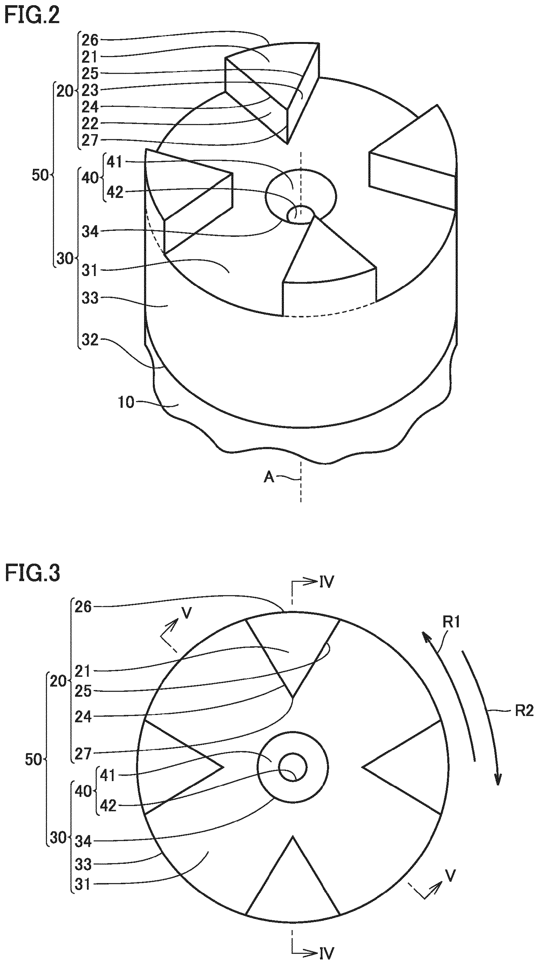

First, a configuration of end mill 1 in accordance with a first embodiment will be described. Fig. 1 is a schematic perspective view of end mill 1 in accordance with the first embodiment. Fig. 2 is an enlarged schematic perspective view in the vicinity of cutting edge main body portion 50 of end mill 1 in accordance with the first embodiment. Fig. 3 is a schematic front view of end mill 1 in accordance with the first embodiment.

End mill 1 in accordance with the first embodiment is a rotary cutting tool used to machine a hard and brittle material such as a cemented carbide, a hardened steel, or the like, for example. As shown in Fig. 1, end mill 1 in accordance with the first embodiment is constituted to be rotatable about rotation axis A, and mainly has shank 10 and cutting edge main body portion 50. Cutting edge main body portion 50 is provided on shank 10. Cutting edge main body portion 50 has a diameter of 6 mm or less, for example. Cutting edge main body portion 50 has cutting edge-side coolant supply path 40. Shank 10 is constituted of a first shank portion 11 and a second shank portion 12, for example. Second shank portion 12 is provided on first shank portion 11. Each of first shank portion 11 and second shank portion 12 is cylindrical. The diameter of first shank portion 11 is larger than the diameter of second shank portion 12.

First shank portion 11 has a first main surface 11a, a second main surface 11b, and a first outer circumferential portion 11c. Second main surface 11b is a surface opposite to first main surface 11a. First outer circumferential portion 11c is provided around rotation axis A. Second shank portion 12 has a third main surface 12a, a fourth main surface 12b, and a second outer circumferential portion 12c. Fourth main surface 12b is a surface opposite to third main surface 12a. First main surface 11a of first shank portion 11 is in contact with fourth main surface 12b of second shank portion 12. Shank 10 is provided with a shank-side coolant supply path 43. Shank-side coolant supply path 43 extends from second main surface 11b to third main surface 12a. Shank-side coolant supply path 43 is continuous to cutting edge-side coolant supply path 40. A coolant is introduced from an opening of shank-side coolant supply path 43 provided in second main surface 11b. The coolant may be a liquid, or may be a gas. When the coolant is a liquid, the liquid may be water soluble, or may be oil soluble.

As shown in Figs. 2 and 3, cutting edge main body portion 50 mainly has leading end surface 21 and trailing end surface 32. Trailing end surface 32 is a surface on a side of shank 10. Trailing end surface 32 faces shank 10. Trailing end surface 32 is joined to third main surface 12a of shank 10 by brazing, for example. Leading end surface 21 is a surface opposite to trailing end surface 32. Cutting edge main body portion 50 is constituted of base portion 30 and cutting edge portions 20. Cutting edge portions 20 are provided on base portion 30. Specifically, base portion 30 has trailing end surface 32, bottom surface 31, and outer circumferential surface 33. Bottom surface 31 is a surface opposite to trailing end surface 32. Bottom surface 31 is a surface parallel to leading end surface 21, for example. Bottom surface 31 may be parallel to a plane perpendicular to rotation axis A. Outer circumferential surface 33 is continuous to each of bottom surface 31 and trailing end surface 32. Outer circumferential surface 33 is provided around rotation axis A. Cutting edge portions 20 are provided on bottom surface 31. The number of cutting edge portions 20 is four, for example. In this case, cutting edge portions 20 are arranged at positions of 0°, 90°, 180°, and 270° in a circumferential direction. The number of cutting edge portions 20 is not particularly limited. The number of cutting edge portions 20 may be six, or may be eight. Cutting edge portions 20 are arranged at regular intervals in the circumferential direction, for example.

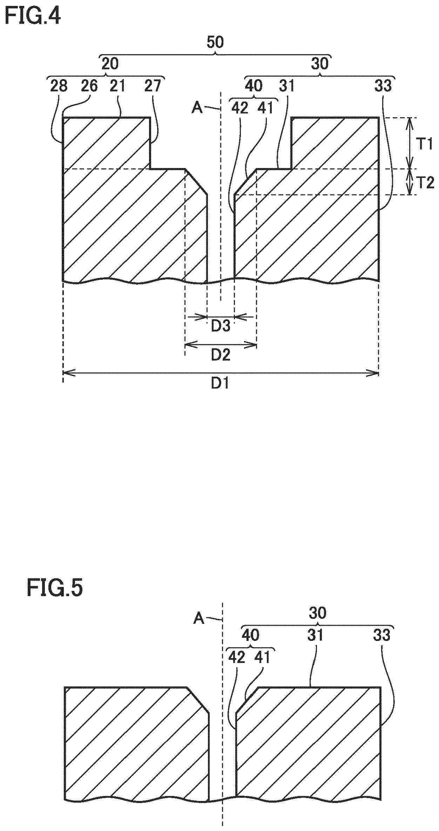

As shown in Figs. 2 and 3, each cutting edge portion 20 mainly has leading end surface 21, a first side surface 22, a second side surface 23, an outer circumferential portion 28 (see Fig. 4), an inner circumferential portion 27, a first bottom cutting edge 24, a second bottom cutting edge 25, and an outer circumferential cutting edge 26. Inner circumferential portion 27 is a ridge line between first side surface 22 and second side surface 23. First bottom cutting edge 24 is a ridge line between first side surface 22 and leading end surface 21. Second bottom cutting edge 25 is a ridge line between second side surface 23 and leading end surface 21. Outer circumferential cutting edge 26 is a ridge line between outer circumferential portion 28 and leading end surface 21. As shown in Fig. 3, when viewed from the direction parallel to rotation axis A, leading end surface 21 has a fan shape, for example. When viewed from the direction parallel to rotation axis A, first bottom cutting edge 24 and second bottom cutting edge 25 have a linear shape, for example. When viewed from the direction parallel to rotation axis A, outer circumferential cutting edge 26 has an arc shape, for example.

As shown in Figs. 2 and 3, in a case where end mill 1 rotates toward a first rotation direction R1 (from another viewpoint, in a case where end mill 1 rotates counterclockwise when viewed from a leading end surface 21 side), first side surface 22 functions as a rake face, and each of first bottom cutting edge 24 and outer circumferential cutting edge 26 functions as an effective cutting edge. Conversely, in a case where end mill 1 rotates toward a second rotation direction R2 (from another viewpoint, in a case where end mill 1 rotates clockwise when viewed from the leading end surface 21 side), second side surface 23 functions as a rake face, and each of second bottom cutting edge 25 and outer circumferential cutting edge 26 functions as an effective cutting edge.

Fig. 4 is a schematic end view taken along a line IV-IV in Fig. 3. Fig. 5 is a schematic end view taken along a line V-V in Fig. 3. As shown in Figs. 4 and 5, coolant supply path 40 has tapered portion 41 and cylindrical portion 42. Tapered portion 41 is a portion which widens in the direction from trailing end surface 32 toward leading end surface 21. Tapered portion 41 extends along a straight line inclined relative to rotation axis A, for example. The width of tapered portion 41 in the direction perpendicular to rotation axis A increases in the direction from trailing end surface 32 toward leading end surface 21. Tapered portion 41 is continuous to bottom surface 31. Bottom surface 31 is inclined relative to tapered portion 41. Cylindrical portion 42 is continuous to tapered portion 41 on a side of trailing end surface 32 of base portion 30. Cylindrical portion 42 extends along rotation axis A. From another viewpoint, cylindrical portion 42 surrounds rotation axis A. Cylindrical portion 42 is continuous to trailing end surface 32.

As shown in Fig. 3, when viewed from the direction parallel to rotation axis A, boundary portion 34 between bottom surface 31 and tapered portion 41 may be located on a more inner circumferential side than inner circumferential portion 27 of cutting edge portion 20. From another viewpoint, when viewed from the direction parallel to rotation axis A, boundary portion 34 between bottom surface 31 and tapered portion 41 may be located between inner circumferential portion 27 of cutting edge portion 20 and cylindrical portion 42. As shown in Fig. 4, when viewed from the direction perpendicular to rotation axis A, boundary portion 34 between bottom surface 31 and tapered portion 41 may be located between inner circumferential portion 27 of cutting edge portion 20 and rotation axis A.

As shown in Fig. 4, when the height of cutting edge portion 20 in the direction parallel to rotation axis A is defined as first height T1, and the depth of tapered portion 41 in the direction parallel to rotation axis A is defined as first depth T2, the value obtained by dividing first height T1 by first depth T2 is 0.1 or more and 200 or less, for example. The upper limit of the value obtained by dividing first height T1 by first depth T2 may be, although not particularly limited to, 100 or less, or 50 or less, for example. The lower limit of the value obtained by dividing first height T1 by first depth T2 may be, although not particularly limited to, 1 or more, or 10 or more, for example. It should be noted that the height of cutting edge portion 20 is a distance from bottom surface 31 to leading end surface 21 in the direction parallel to rotation axis A.

When the diameter of cutting edge main body portion 50 in the direction perpendicular to rotation axis A is defined as first diameter D1, and the maximum value of the diameter of tapered portion 41 in the direction perpendicular to rotation axis A is defined as second diameter D2, the value obtained by dividing second diameter D2 by first diameter D1 is 0.005 or more and 3 or less, for example. The upper limit of the value obtained by dividing second diameter D2 by first diameter D1 may be, although not particularly limited to, 1 or less, or 0.5 or less, for example. The lower limit of the value obtained by dividing second diameter D2 by first diameter D1 may be, although not particularly limited to, 0.01 or more, or 0.1 or more, for example.

When the diameter of cylindrical portion 42 in the direction perpendicular to rotation axis A is defined as third diameter D3, the value obtained by dividing third diameter D3 by first diameter D1 is 0.005 or more and 3 or less, for example. The upper limit of the value obtained by dividing third diameter D3 by first diameter D1 may be, although not particularly limited to, 1 or less, or 0.5 or less, for example. The lower limit of the value obtained by dividing third diameter D3 by first diameter D1 may be, although not particularly limited to, 0.01 or more, or 0.1 or more, for example. However, second diameter D2 is larger than third diameter D3.

The material constituting cutting edge main body portion 50 is polycrystalline diamond, single crystal diamond, cubic boron nitride, or the like, for example. Desirably, the material constituting cutting edge main body portion 50 is a binderless polycrystalline nanodiamond sintered body. Specifically, the polycrystalline diamond has an average particle diameter of 1 µm or less, for example. The average particle diameter of the polycrystalline diamond may be, although not particularly limited to, 0.1 µm or less, or 0.05 µm or less, for example. As a method for measuring a particle diameter, the same method as the method disclosed in Japanese Patent No. 5432610 can be used. It should be noted that a D95 particle diameter of the polycrystalline diamond may be 1 µm or less, 0.1 µm or less, or 0.05 µm or less, for example. The average particle diameter and the D95 particle diameter of the polycrystalline diamond can be measured by the following method.

### <Method for Measuring Particle Diameter of Polycrystalline Diamond>

The average particle diameter of diamond particles in the polycrystalline diamond can be obtained by performing image analysis using a scanning electron microscope (SEM) with a magnification of 10 to 500,000 times, based on a photographic image. Since diamond is an insulator, coating of a conductive thin film is required for SEM observation with high magnification, and it is not possible to observe such a fine particle diameter in ordinary SEM observation. By using a SEM having a highly sensitive detector including a combination of a scintillator and a photomultiplier, setting an accelerating voltage to be extremely low (0.7 to 1.5 kV), and increasing the amount of probe current to 15 to 16.5 pA, it is possible to observe texture with a magnification of 2 to 100,000 times. By performing image analysis based on the photographic image, the average particle diameter and the D95 particle diameter can be obtained. The detailed method will be described below.

First, particle diameter distribution of crystal particles constituting a sintered body is measured based on the photographic image captured with the scanning electron microscope. Specifically, image analysis software (for example, Scionlmage manufactured by Scion Corporation) is used to extract individual particles, binarize the extracted particles, and calculate the area (S) of each particle. Then, the particle diameter (D) of each particle is calculated as a diameter of a circle having the same area (D = 2√(S/π)). Subsequently, the particle diameter distribution obtained above is processed by data analysis software (for example, Origin manufactured by OriginLab, Mathchad manufactured by Parametric Technology, or the like), and thereby the average particle diameter and the D95 particle diameter can be calculated.

Next, the function and effect of end mill 1 in accordance with the first embodiment will be described.

According to end mill 1 in accordance with the first embodiment, coolant supply path 40 has tapered portion 41 which widens in the direction from trailing end surface 32 toward leading end surface 21. Thereby, the coolant is vigorously discharged to the tips of the cutting edges, when compared with an end mill without having tapered portion 41. Accordingly, the efficiency of cooling the tips of the cutting edges is improved, and end mill 1 can have a longer life.

In addition, according to end mill 1 in accordance with the first embodiment, cutting edge main body portion 50 may include base portion 30 having trailing end surface 32 and bottom surface 31 opposite to trailing end surface 32, and cutting edge portion 20 provided on bottom surface 31. Bottom surface 31 may be continuous to tapered portion 41, inclined relative to tapered portion 41, and continuous to outer circumferential surface 33. Thereby, the coolant can be effectively supplied to the vicinity of the tips of the cutting edges. Accordingly, the efficiency of cooling the tips of the cutting edges is further improved, and end mill 1 can have a further longer life.

Further, according to end mill 1 in accordance with the first embodiment, the material constituting cutting edge main body portion 50 may be polycrystalline diamond. When a workpiece is made of an iron-based material, the cutting edges may be significantly worn, because diamond and iron have high reactivity. Accordingly, the effect of suppressing wear is enhanced in particular in end mill 1 having cutting edge main body portion 50 made of diamond and used for a workpiece made of an iron-based material.

### (Second Embodiment)

Next, a configuration of end mill 1 in accordance with a second embodiment will be described. End mill 1 in accordance with the second embodiment is different from end mill 1 in accordance with the first embodiment in the respect that boundary portion 34 between bottom surface 31 and tapered portion 41 is continuous to inner circumferential portion 27 of cutting edge portion 20, and is the same as end mill 1 in accordance with the first embodiment in other respects. Hereinafter, the respect different from end mill 1 in accordance with the first embodiment will be mainly described.

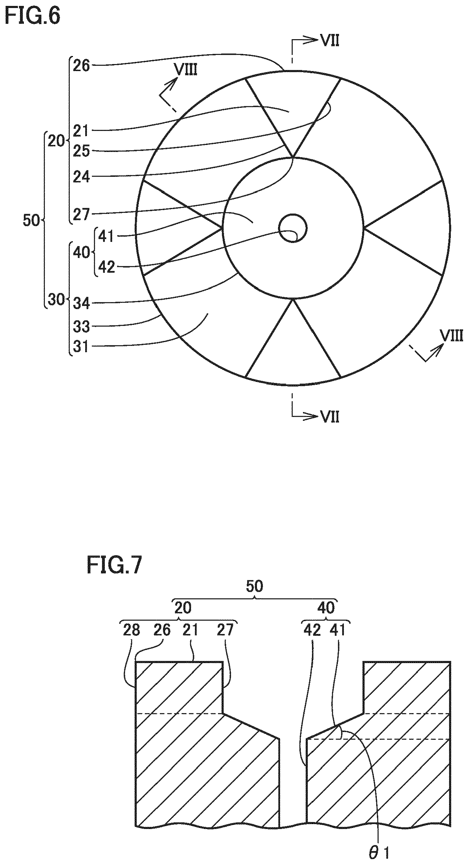

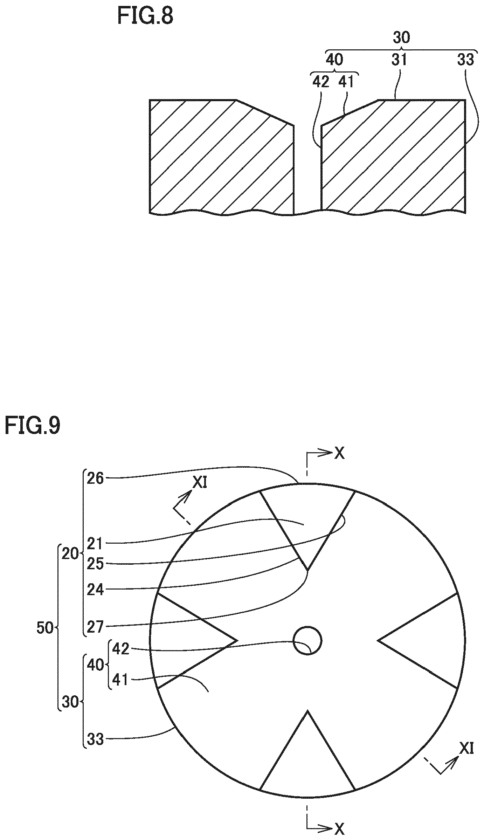

Fig. 6 is a schematic front view of end mill 1 in accordance with the second embodiment. Fig. 7 is a schematic end view taken along a line VII-VII in Fig. 6. Fig. 8 is a schematic end view taken along a line VIII-VIII in Fig. 6. As shown in Fig. 6, when viewed from the direction parallel to rotation axis A, boundary portion 34 between bottom surface 31 and tapered portion 41 may be continuous to inner circumferential portion 27 of cutting edge portion 20. When viewed from the direction parallel to rotation axis A, a distance from inner circumferential portion 27 of cutting edge portion 20 to rotation axis A may be the same as a distance from boundary portion 34 between bottom surface 31 and tapered portion 41 to rotation axis A. As shown in Fig. 7, an inclined angle θ1 of tapered portion 41 relative to the plane perpendicular to rotation axis A is 0° or more and 80° or less, for example. As shown in Fig. 8, a length of bottom surface 31 in a radial direction of end mill 1 in accordance with the second embodiment is longer than a length of bottom surface 31 in a radial direction of end mill 1 in accordance with the first embodiment.

According to end mill 1 in accordance with the second embodiment, the coolant can be effectively supplied to the cutting edges on the inner circumferential side. Accordingly, the efficiency of cooling the cutting edges is further improved, and end mill 1 can have a further longer life.

### (Third Embodiment)

Next, a configuration of end mill 1 in accordance with a third embodiment will be described. End mill 1 in accordance with the third embodiment is different from end mill 1 in accordance with the first embodiment in the respect that tapered portion 41 is continuous to outer circumferential surface 33 of base portion 30, and is the same as end mill 1 in accordance with the first embodiment in other respects. Hereinafter, the respect different from end mill 1 in accordance with the first embodiment will be mainly described.

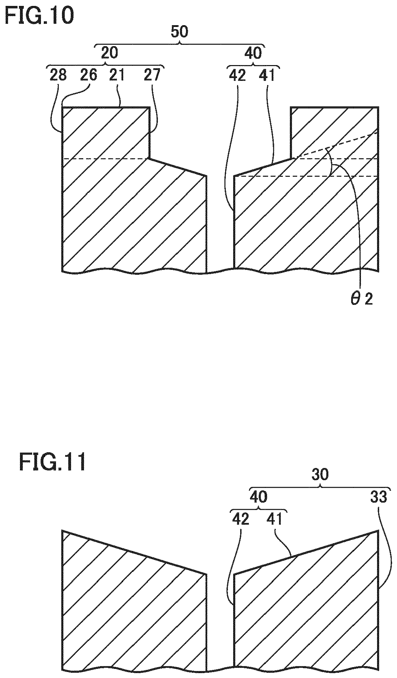

Fig. 9 is a schematic front view of end mill 1 in accordance with the third embodiment. Fig. 10 is a schematic end view taken along a line X-X in Fig. 9. Fig. 11 is a schematic end view taken along a line XI-XI in Fig. 9. As shown in Figs. 9 and 11, tapered portion 41 may be continuous to outer circumferential surface 33 of base portion 30. As shown in Fig. 10, tapered portion 41 may be continuous to inner circumferential portion 27 of cutting edge portion 20. Tapered portion 41 may be continuous to each of first side surface 22 and second side surface 23. As shown in Fig. 10, an inclined angle θ2 of tapered portion 41 relative to the plane perpendicular to rotation axis A is 10° or more and 80° or less, for example.

According to end mill 1 in accordance with the third embodiment, the coolant can be effectively supplied to the cutting edges on the outer circumferential side. Accordingly, the efficiency of cooling the cutting edges is further improved, and end mill 1 can have a further longer life.

### (Fourth Embodiment)

Next, a configuration of end mill 1 in accordance with a fourth embodiment will be described. End mill 1 in accordance with the fourth embodiment is different from end mill 1 in accordance with the first embodiment in the respect that boundary portion 34 between bottom surface 31 and tapered portion 41 is located between inner circumferential portion 27 of cutting edge portion 20 and outer circumferential surface 33, and is the same as end mill 1 in accordance with the first embodiment in other respects. Hereinafter, the respect different from end mill 1 in accordance with the first embodiment will be mainly described.

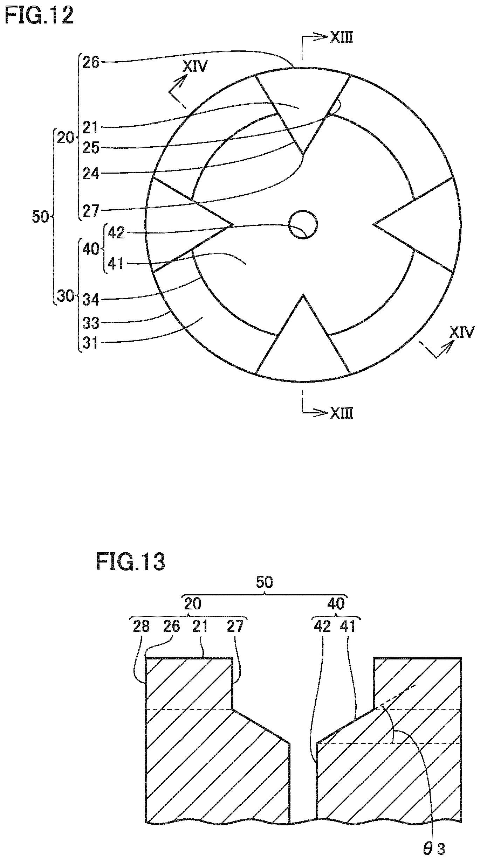

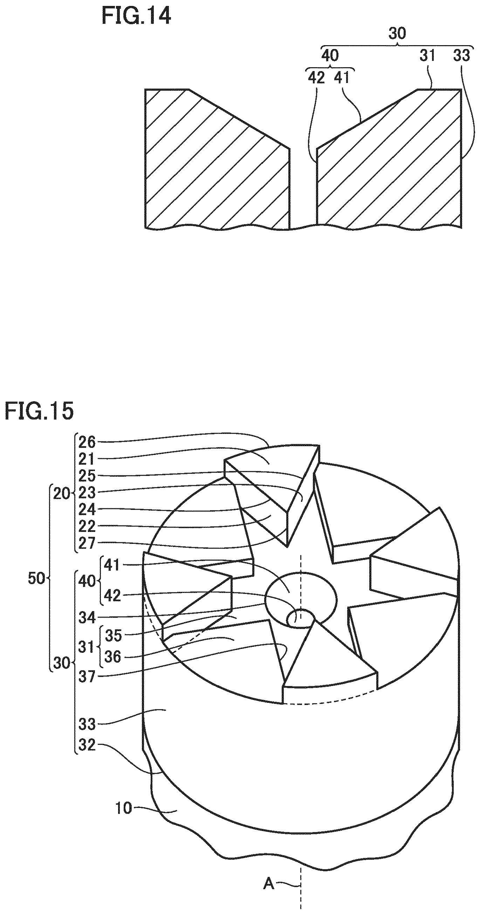

Fig. 12 is a schematic front view of end mill 1 in accordance with the fourth embodiment. Fig. 13 is a schematic end view taken along a line XIII-XIII in Fig. 12. Fig. 14 is a schematic end view taken along a line XIV-XIV in Fig. 12. As shown in Fig. 12, when viewed from the direction parallel to rotation axis A, boundary portion 34 between bottom surface 31 and tapered portion 41 may be located between inner circumferential portion 27 of cutting edge portion 20 and outer circumferential surface 33. From another viewpoint, when viewed from the direction parallel to rotation axis A, a distance from boundary portion 34 between bottom surface 31 and tapered portion 41 to rotation axis A may be longer than a distance from inner circumferential portion 27 of cutting edge portion 20 to rotation axis A and shorter than a distance from outer circumferential surface 33 to rotation axis A. Tapered portion 41 may be continuous to each of first side surface 22 and second side surface 23. As shown in Fig. 13, tapered portion 41 may be continuous to inner circumferential portion 27 of cutting edge portion 20. As shown in Fig. 14, tapered portion 41 is separated from outer circumferential surface 33 of base portion 30. As shown in Fig. 13, an inclined angle θ3 of tapered portion 41 relative to the plane perpendicular to rotation axis A is 10° or more and 80° or less, for example.

According to end mill 1 in accordance with the fourth embodiment, when viewed from the direction parallel to rotation axis A, boundary portion 34 between bottom surface 31 and tapered portion 41 is located between inner circumferential portion 27 of cutting edge portion 20 and outer circumferential surface 33. Thereby, the coolant can be effectively supplied to the cutting edges on both the inner circumferential side and the outer circumferential side. Accordingly, the efficiency of cooling the cutting edges is further improved, and end mill 1 can have a further longer life.

### (Fifth Embodiment)

Next, a configuration of end mill 1 in accordance with a fifth embodiment will be described. End mill 1 in accordance with the fifth embodiment is different from end mill 1 in accordance with the first embodiment in the respect that bottom surface 31 has first bottom surface portion 35 and second bottom surface portion 36, and is the same as end mill 1 in accordance with the first embodiment in other respects. Hereinafter, the respect different from end mill 1 in accordance with the first embodiment will be mainly described.

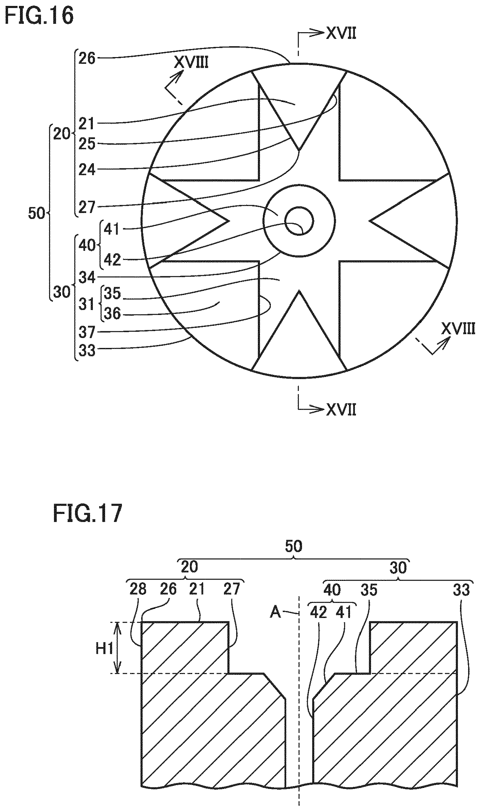

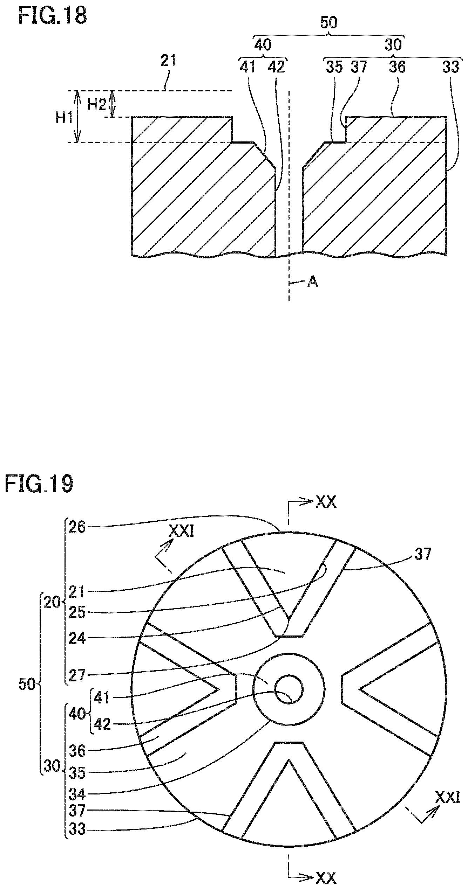

Fig. 15 is an enlarged schematic perspective view in the vicinity of a cutting edge main body portion of end mill 1 in accordance with the fifth embodiment. Fig. 16 is a schematic front view of end mill 1 in accordance with the fifth embodiment. Fig. 17 is a schematic end view taken along a line XVII-XVII in Fig. 16. Fig. 18 is a schematic end view taken along a line XVIII-XVIII in Fig. 16. As shown in Figs. 15 and 16, bottom surface 31 may have first bottom surface portion 35 and second bottom surface portion 36. First bottom surface portion 35 is continuous to tapered portion 41. Second bottom surface portion 36 is continuous to outer circumferential surface 33. Second bottom surface portion 36 is located on a more outer circumferential side than first bottom surface portion 35. As shown in Fig. 16, when viewed from the direction parallel to rotation axis A, second bottom surface portion 36 is located between first bottom surface portion 35 and outer circumferential surface 33.

As shown in Figs. 17 and 18, second bottom surface portion 36 is located closer to leading end surface 21 than first bottom surface portion 35. Each of first bottom surface portion 35 and second bottom surface portion 36 may be parallel to leading end surface 21. As shown in Figs. 17 and 18, when the distance from leading end surface 21 to first bottom surface portion 35 in the direction parallel to rotation axis A is defined as a first distance HI, and the distance from leading end surface 21 to second bottom surface portion 36 in the direction parallel to rotation axis A is defined as a second distance H2, first distance H1 may be larger than second distance H2. First distance H1 is 0.1 mm or more and 3 mm or less, for example. Second distance H2 is 0.05 mm or more and 3 mm or less, for example. However, first distance H1 is larger than second distance H2.

As shown in Fig. 18, base portion 30 may have a third side surface 37. Third side surface 37 is continuous to each of first bottom surface portion 35 and second bottom surface portion 36. Third side surface 37 extends along the direction parallel to rotation axis A, for example. As shown in Fig. 16, third side surface 37 may be bent. Third side surface 37 may be continuous to each of first side surface 22 and second side surface 23. As shown in Fig. 15, first bottom surface portion 35 may be continuous to each of first side surface 22 and second side surface 23. Second bottom surface portion 36 may be continuous to each of first side surface 22 and second side surface 23. First bottom surface portion 35 may be continuous to cutting edge portion 20 and separated from outer circumferential surface 33.

According to end mill 1 in accordance with the fifth embodiment, first bottom surface portion 35 is continuous to cutting edge portion 20 and is separated from outer circumferential surface 33. Thereby, the coolant can be effectively supplied to the vicinity of the cutting edges. Accordingly, the efficiency of cooling the cutting edges is further improved, and end mill 1 can have a further longer life.

### (Sixth Embodiment)

Next, a configuration of end mill 1 in accordance with a sixth embodiment will be described. End mill 1 in accordance with the sixth embodiment is different from end mill 1 in accordance with the fifth embodiment in the respect that first bottom surface portion 35 is separated from cutting edge portion 20 and is continuous to outer circumferential surface 33, and is the same as end mill 1 in accordance with the fifth embodiment in other respects. Hereinafter, the respect different from end mill 1 in accordance with the fifth embodiment will be mainly described.

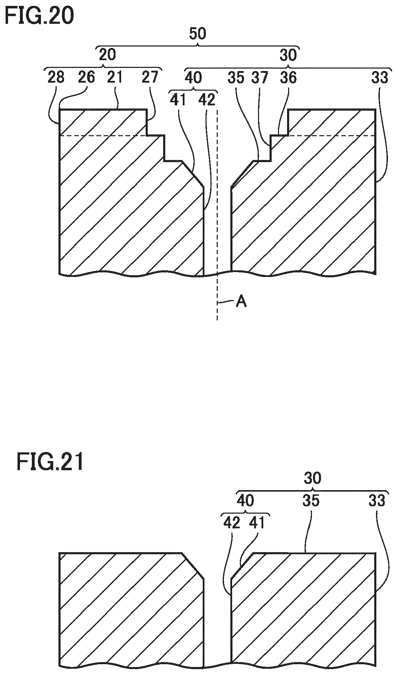

Fig. 19 is a schematic front view of end mill 1 in accordance with the sixth embodiment. Fig. 20 is a schematic end view taken along a line XX-XX in Fig. 19. Fig. 21 is a schematic end view taken along a line XXI-XXI in Fig. 19. As shown in Fig. 19, first bottom surface portion 35 may be separated from cutting edge portion 20 and continuous to outer circumferential surface 33. As shown in Fig. 20, each of first bottom surface portion 35 and second bottom surface portion 36 may be located between inner circumferential portion 27 of cutting edge portion 20 and rotation axis A. As shown in Fig. 21, first bottom surface portion 35 is continuous to each of tapered portion 41 and outer circumferential surface 33. As shown in Fig. 19, second bottom surface portion 36 is continuous to outer circumferential surface 33, and is separated from tapered portion 41.

As shown in Fig. 19, third side surface 37 may be separated from cutting edge portion 20. Third side surface 37 may have a portion parallel to first side surface 22. Similarly, third side surface 37 may have a portion parallel to second side surface 23. Third side surface 37 may have a portion located between inner circumferential portion 27 of cutting edge portion 20 and tapered portion 41.

According to end mill 1 in accordance with the sixth embodiment, the coolant can be effectively supplied to the vicinity of the cutting edges on the outer circumferential side. Accordingly, the efficiency of cooling the cutting edges is further improved, and end mill 1 can have a further longer life.

### (Seventh Embodiment)

Next, a configuration of end mill 1 in accordance with a seventh embodiment will be described. End mill 1 in accordance with the seventh embodiment is different from end mill 1 in accordance with the fifth embodiment in the respect that first bottom surface portion 35 is continuous to each of cutting edge portion 20 and outer circumferential surface 33, and is the same as end mill 1 in accordance with the fifth embodiment in other respects. Hereinafter, the respect different from end mill 1 in accordance with the fifth embodiment will be mainly described.

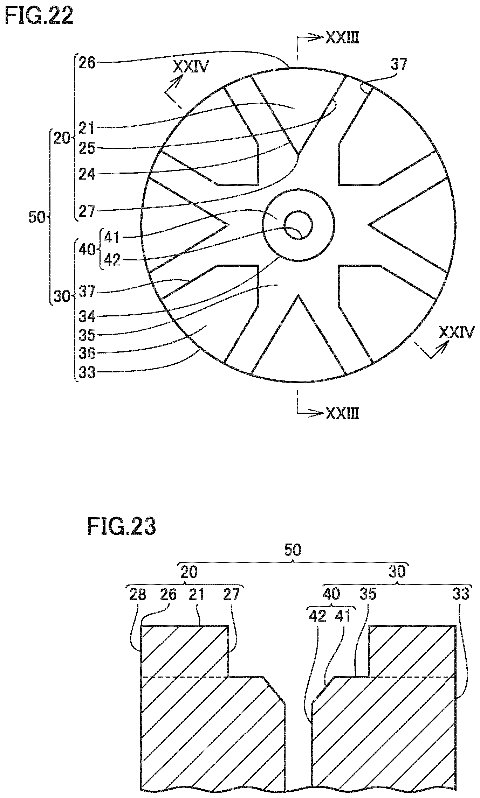

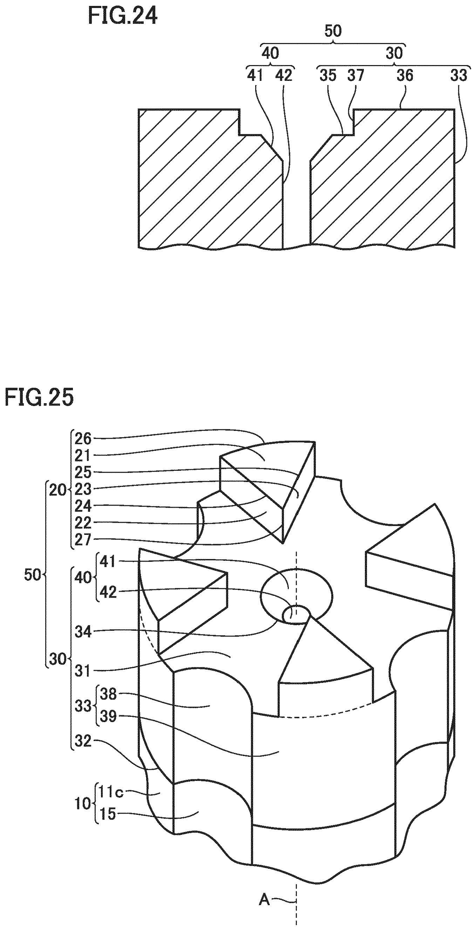

Fig. 22 is a schematic front view of end mill 1 in accordance with the seventh embodiment. Fig. 23 is a schematic end view taken along a line XXIII-XXIII in Fig. 22. Fig. 24 is a schematic end view taken along a line XXIV-XXIV in Fig. 22. As shown in Fig. 22, first bottom surface portion 35 may be continuous to each of cutting edge portion 20 and outer circumferential surface 33. Second bottom surface portion 36 is continuous to outer circumferential surface 33, and is separated from cutting edge portion 20.

As shown in Fig. 22, third side surface 37 may be separated from cutting edge portion 20. Third side surface 37 may have a portion parallel to first bottom cutting edge 24. Similarly, third side surface 37 may have a portion parallel to second bottom cutting edge 25. As shown in Fig. 24, second bottom surface portion 36 is separated from tapered portion 41.

According to end mill 1 in accordance with the seventh embodiment, first bottom surface portion 35 may be continuous to each of cutting edge portion 20 and outer circumferential surface 33. Thereby, the coolant can be effectively supplied to the vicinity of the cutting edges on the outer circumferential side. Accordingly, the efficiency of cooling the cutting edges on the outer circumferential side is further improved, and end mill 1 can have a further longer life.

### (Eighth Embodiment)

Next, a configuration of end mill 1 in accordance with an eighth embodiment will be described. End mill 1 in accordance with the eighth embodiment is different from end mill 1 in accordance with the first embodiment in the respect that outer circumferential surface 33 is provided with cutting edge-side outer circumferential grooves 38 which are continuous to bottom surface 31, and is the same as end mill 1 in accordance with the first embodiment in other respects. Hereinafter, the respect different from end mill 1 in accordance with the first embodiment will be mainly described.

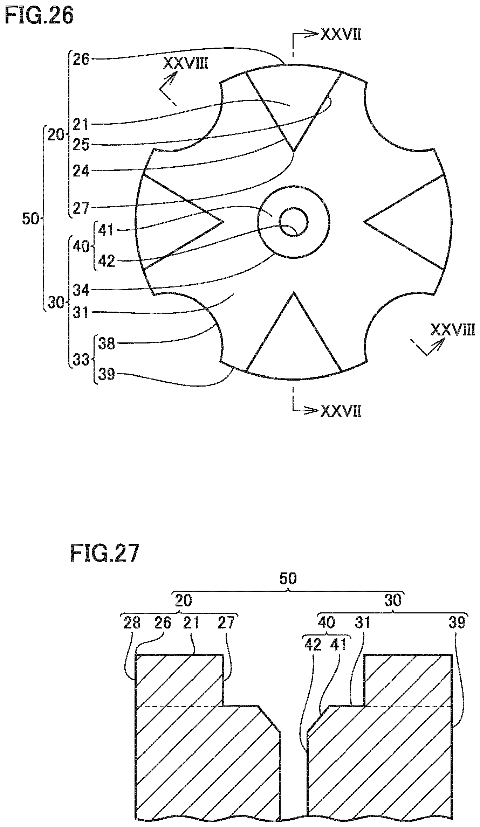

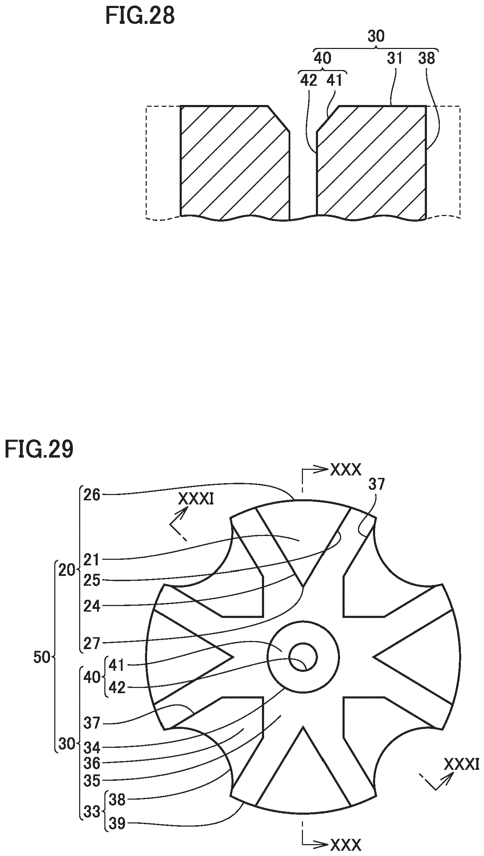

Fig. 25 is an enlarged schematic perspective view in the vicinity of a cutting edge main body portion of end mill 1 in accordance with the eighth embodiment. Fig. 26 is a schematic front view of end mill 1 in accordance with the eighth embodiment. Fig. 27 is a schematic end view taken along a line XXVII-XVII in Fig. 26. Fig. 28 is a schematic end view taken along a line XXVIII-XXVIII in Fig. 26. As shown in Figs. 25 and 26, outer circumferential surface 33 may be provided with cutting edge-side outer circumferential grooves 38 which are continuous to bottom surface 31. Outer circumferential surface 33 is constituted of arc-shaped surfaces 39 and cutting edge-side outer circumferential grooves 38. Each cutting edge-side outer circumferential groove 38 is recessed to the inner circumferential side. Each arc-shaped surface 39 protrudes to the outer circumferential side. Arc-shaped surface 39 is continuous to cutting edge portion 20. Cutting edge-side outer circumferential groove 38 is separated from cutting edge portion 20.

Cutting edge-side outer circumferential groove 38 extends from bottom surface 31 toward shank 10. Cutting edge-side outer circumferential groove 38 may reach trailing end surface 32, or may be separated from trailing end surface 32. Cutting edge-side outer circumferential groove 38 may extend in the direction parallel to rotation axis A, or may spirally extend around rotation axis A. As shown in Fig. 25, shank 10 may be provided with shank-side outer circumferential grooves 15. Cutting edge-side outer circumferential groove 38 may be continuous to shank-side outer circumferential groove 15. Cutting edge-side outer circumferential groove 38 may extend along shank-side outer circumferential groove 15. As shown in Fig. 28, cutting edge-side outer circumferential groove 38 may be provided in parallel with cylindrical portion 42 of coolant supply path 40. Bottom surface 31 is continuous to each of tapered portion 41 and cutting edge-side outer circumferential groove 38. As shown in Fig. 26, bottom surface 31 may be continuous to arc-shaped surface 39 of outer circumferential surface 33.

According to end mill 1 in accordance with the eighth embodiment, outer circumferential surface 33 is provided with outer circumferential grooves 38 which are continuous to bottom surface 31. Thereby, chips and the coolant can be effectively discharged. Accordingly, the efficiency of cooling the tips of the cutting edges is further improved, and end mill 1 can have a further longer life.

### (Ninth Embodiment)

Next, a configuration of end mill 1 in accordance with a ninth embodiment will be described. End mill 1 in accordance with the ninth embodiment is different from end mill 1 in accordance with the eighth embodiment in the respect that bottom surface 31 has first bottom surface portion 35 and second bottom surface portion 36, and is the same as end mill 1 in accordance with the eighth embodiment in other respects. Hereinafter, the respect different from end mill 1 in accordance with the eighth embodiment will be mainly described.

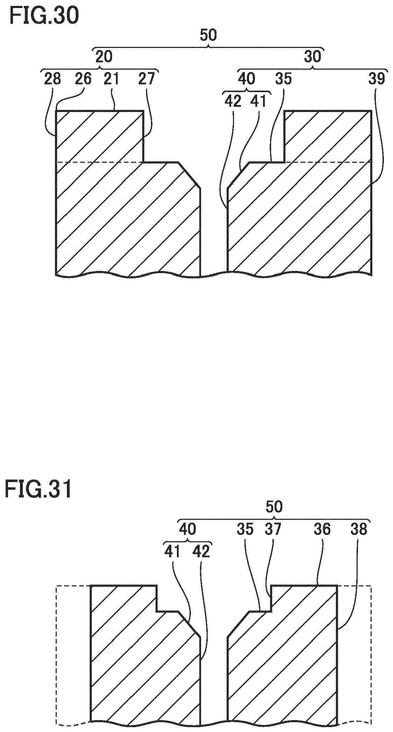

Fig. 29 is a schematic front view of end mill 1 in accordance with the ninth embodiment. Fig. 30 is a schematic end view taken along a line XXX-XXX in Fig. 29. Fig. 31 is a schematic end view taken along a line XXXI-XXXI in Fig. 29. As shown in Fig. 29, bottom surface 31 may have first bottom surface portion 35 and second bottom surface portion 36. First bottom surface portion 35 is continuous to each of tapered portion 41 and an arc-shaped portion of outer circumferential surface 33. Second bottom surface portion 36 is continuous to cutting edge-side outer circumferential groove 38 of outer circumferential surface 33. As shown in Fig. 29, when viewed from the direction parallel to rotation axis A, second bottom surface portion 36 may be surrounded by first bottom surface portion 35 and cutting edge-side outer circumferential groove 38.

As shown in Figs. 30 and 31, second bottom surface portion 36 is located closer to leading end surface 21 than first bottom surface portion 35. Each of first bottom surface portion 35 and second bottom surface portion 36 may be parallel to leading end surface 21. As shown in Fig. 29, base portion 30 may have third side surface 37. As shown in Fig. 31, third side surface 37 is continuous to each of first bottom surface portion 35 and second bottom surface portion 36. Third side surface 37 extends along the direction parallel to rotation axis A, for example. As shown in Fig. 29, first bottom surface portion 35 may be continuous to each of cutting edge portion 20 and outer circumferential surface 33. Second bottom surface portion 36 may be continuous to cutting edge-side outer circumferential groove 38 of outer circumferential surface 33 and separated from cutting edge portion 20.

As shown in Fig. 29, third side surface 37 may be separated from cutting edge portion 20. Third side surface 37 may have a portion parallel to first bottom cutting edge 24. Similarly, third side surface 37 may have a portion parallel to second bottom cutting edge 25. As shown in Fig. 31, second bottom surface portion 36 is separated from tapered portion 41. Third side surface 37 may be continuous to cutting edge-side outer circumferential groove 38 of outer circumferential surface 33. First bottom surface portion 35 may be continuous to cutting edge-side outer circumferential groove 38 of outer circumferential surface 33.

According to end mill 1 in accordance with the ninth embodiment, chips and the coolant can be effectively discharged. In addition, the cutting edges on the outer circumferential side can be effectively cooled. Accordingly, the efficiency of cooling the tips of the cutting edges is further improved, and end mill 1 can have a further longer life.

It should be noted that the workpiece to be suitably machined by the end mill in accordance with each embodiment described above is a mold made of ceramic, a cemented carbide, or a hardened steel, for example. Examples of the type of the ceramic include zirconia, aluminum, and the like. Examples of the type of the cemented carbide include AF1, G5, G6, and the like. Examples of the type of the hardened steel include SKD11.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

### REFERENCE SIGNS LIST

1: end mill; 10: shank; 11: first shank portion; 11a: first main surface; 11b: second main surface; 11c: first outer circumferential portion; 12: second shank portion; 12a: third main surface; 12b: fourth main surface; 12c: second outer circumferential portion; 15: shank-side outer circumferential groove; 20: cutting edge portion; 21: leading end surface; 22: first side surface; 23: second side surface; 24: first bottom cutting edge; 25: second bottom cutting edge; 26: outer circumferential cutting edge; 27: inner circumferential portion; 28: outer circumferential portion; 30: base portion; 31: bottom surface; 32: trailing end surface; 33: outer circumferential surface; 34: boundary portion; 35: first bottom surface portion; 36: second bottom surface portion; 37: third side surface; 37a: first portion; 37b: second portion; 37c: third portion; 37d: fourth portion; 38: outer circumferential groove (cutting edge-side outer circumferential groove); 39: arc-shaped surface; 40: coolant supply path (cutting edge-side coolant supply path); 41: tapered portion; 42: cylindrical portion; 43: shank-side coolant supply path; 50: cutting edge main body portion; A: rotation axis; D1: first diameter; D2: second diameter; D3: third diameter; H1: first distance; H2: second distance; R1: first rotation direction; R2: second rotation direction; T1: first height; T2: first depth.

## Claims

1. An end mill comprising:
a shank; and
a cutting edge main body portion provided on the shank and having a coolant supply path,
the cutting edge main body portion including a trailing end surface on a side of the shank, and a leading end surface opposite to the trailing end surface,
the coolant supply path having a tapered portion which widens in a direction from the trailing end surface toward the leading end surface.

2. The end mill according to claim 1, wherein the cutting edge main body portion includes an outer circumferential surface which is continuous to the trailing end surface and is provided around a rotation axis.

3. The end mill according to claim 2, wherein
the cutting edge main body portion includes a base portion having the trailing end surface and a bottom surface opposite to the trailing end surface, and a cutting edge portion provided on the bottom surface, and
the bottom surface is continuous to the tapered portion, is inclined relative to the tapered portion, and is continuous to the outer circumferential surface.

4. The end mill according to claim 3, wherein, when viewed from a direction parallel to the rotation axis, a boundary portion between the bottom surface and the tapered portion is located between an inner circumferential portion of the cutting edge portion and the outer circumferential surface.

5. The end mill according to claim 3, wherein
the bottom surface has a first bottom surface portion which is continuous to the tapered portion, and a second bottom surface portion which is continuous to the outer circumferential surface, and
when viewed from a direction parallel to the rotation axis, a distance from the leading end surface to the first bottom surface portion is longer than a distance from the leading end surface to the second bottom surface portion.

6. The end mill according to claim 5, wherein the first bottom surface portion is continuous to the cutting edge portion, and is separated from the outer circumferential surface.

7. The end mill according to claim 5, wherein the first bottom surface portion is continuous to each of the cutting edge portion and the outer circumferential surface.

8. The end mill according to claim 5, wherein the first bottom surface portion is separated from the cutting edge portion, and is continuous to the outer circumferential surface.

9. The end mill according to any one of claims 3 to 8, wherein the outer circumferential surface is provided with an outer circumferential groove which is continuous to the bottom surface.

10. The end mill according to any one of claims 3 to 9, wherein, when a height of the cutting edge portion in a direction parallel to the rotation axis is defined as a first height, and a depth of the tapered portion in the direction parallel to the rotation axis is defined as a first depth, a value obtained by dividing the first height by the first depth is 0.1 or more and 200 or less.

11. The end mill according to any one of claims 2 to 9, wherein, when a diameter of the cutting edge main body portion in a direction perpendicular to the rotation axis is defined as a first diameter, and a maximum value of a diameter of the tapered portion in the direction perpendicular to the rotation axis is defined as a second diameter, a value obtained by dividing the second diameter by the first diameter is 0.005 or more and 3 or less.

12. The end mill according to claim 11, wherein
the coolant supply path has a cylindrical portion which is continuous to the tapered portion on a side of the trailing end surface and extends along the rotation axis,
when a diameter of the cylindrical portion in the direction perpendicular to the rotation axis is defined as a third diameter, a value obtained by dividing the third diameter by the first diameter is 0.005 or more and 3 or less, and
the second diameter is larger than the third diameter.

13. The end mill according to any one of claims 1 to 12, wherein a material constituting the cutting edge main body portion is any of polycrystalline diamond, single crystal diamond, or cubic boron nitride.

14. The end mill according to claim 13, wherein
the material constituting the cutting edge main body portion is polycrystalline diamond, and
the polycrystalline diamond has an average particle diameter of 1 µm or less.
